# EUROPÄISCHE PATENTANMELDUNG

(11) **EP 2 455 554 A2**
(43) Veröffentlichungstag der Anmeldung: **23.05.2012**
(21) Anmeldenummer: 11008731.9
(22) Anmeldetag: 02.11.2011
(51) Int. Cl.: E02F 9/22, F15B 11/064

(54) **Arbeitsgerät**

(30) Priorität: 17.11.2010 DE 102010051651
(71) Anmelder: Liebherr-Hydraulikbagger GmbH, 88457 Kirchdorf/Iller (DE)
(72) Erfinder: Lavergne, Hans-Peter, Staatl. gepr. MB, 87779 Trunkelsberg (DE); Egenrieder, Philipp, Dipl.-Ing., 89075 Ulm (DE)
(74) Vertreter: Laufhütte, Dieter

(57) **Zusammenfassung**

Die vorliegende Erfindung betrifft ein Arbeitsgerät mit einem über mindestens einen Arbeitshydraulikzylinder bewegbaren Element (2), wobei mindestens ein Energierückgewinnungszylinder (3) zur Energierückgewinnung aus der Bewegung des bewegbaren Elements (2) vorgesehen ist, welcher eine mit Gas befüllte Kammer aufweist. Dabei steht die mit Gas befüllte Kammer mit einem Druckspeicher in Wirkverbindung, welcher einem Druckanstieg in der mit Gas befüllten Kammer zumindest ab einem Maximaldruck entgegenwirkt.

## Beschreibung

Die vorliegende Erfindung betrifft ein Arbeitsgerät mit einem über mindestens einen Arbeitszylinder bewegbaren Element, wobei mindestens ein Energierückgewinnungszylinder zur Energierückgewinnung aus der Bewegung des bewegbaren Elements vorgesehen ist, welcher eine mit Gas befüllte Kammer aufweist. Insbesondere betrifft die vorliegende Erfindung dabei ein verfahrbares Arbeitsgerät, insbesondere einen Bagger oder eine Maschine zum Materialumschlag.

Die mit Gas befüllte Kammer des Energierückgewinnungszylinders wird bei solchen Arbeitsgeräten bei einem Absenken des bewegbaren Elementes komprimiert und speichert so die potentielle Energie, um diese bei einer Aufwärtsbewegung des bewegbaren Elementes zur Unterstützung der Arbeitshydraulikzylinder wieder abzugeben.

Aus der DE 10 2008 034 582 A1 ist ein Arbeitsgerät bekannt, bei welchem die mit Gas befüllte Kammer des Energierückgewinnungszylinders durch die mit Gas gefüllte Bodenseite des Energierückgewinnungszylinders sowie die hohle Kolbenstange des Energierückgewinnungszylinders gebildet wird. Dabei ist ein Befüllventil zum Befüllen der mit Gas gefüllten Kammer sowie ein Überdruckventil vorgesehen, durch welches Gas bei Überschreiten einer voreingestellten Druckgrenze entweichen kann, um ein Bersten des Zylinders zu vermeiden.

Aufgabe der vorliegenden Erfindung ist es, die Funktion eines bekannten Arbeitsgerätes mit Energierückgewinnungszylinder zu verbessern, insbesondere hinsichtlich der dauerhaften Einsetzbarkeit und der Energieeffizienz.

Diese Aufgabe wird erfindungsgemäß durch ein Arbeitsgerät gemäß Anspruch 1 gelöst. Dieses erfindungsgemäße Arbeitsgerät umfaßt ein bewegbares Element, welches über mindestens einen Arbeitshydraulikzylinder bewegt werden kann. Weiterhin ist mindestens ein Energierückgewinnungszylinder zur Energierückgewinnung aus der Bewegung des bewegbaren Elementes vorgesehen. Der Energierückgewinnungszylinder umfaßt dabei eine mit Gas befüllte Kammer. Erfindungsgemäß ist vorgesehen, daß die mit Gas befüllte Kammer mit einem Druckspeicher in Wirkverbindung steht, welcher einem Druckanstieg in der mit Gas befüllten Kammer zumindest ab einem Maximaldruck entgegenwirkt.

Die Erfinder der vorliegenden Erfindung haben bei Versuchen mit Energierückgewinnungszylindern mit einer mit Gas befüllten Kammer herausgefunden, daß es insbesondere bei schnellen Bewegungen und hoher Kompression in der mit Gas befüllten Kammer zu einem unerwünscht hohen Druckanstieg kommen kann. Erfindungsgemäß wirkt die vorliegende Erfindung dem entgegen, indem die mit Gas befüllte Kammer mit einem weiteren Druckspeicher in Wirkverbindung gesetzt wird. Dieser wirkt dem ungewünschten Druckanstieg in der mit Gas befüllten Kammer zumindest ab einem Maximaldruck entgegen und verringert so den weiteren Druckanstieg über den Maximaldruck in der mit Gas befüllten Kammer.

Vorteilhafterweise weist der Druckspeicher hierfür einen vorbestimmten Betriebsdruck auf, welcher den Maximaldruck definiert. Stehen der Druckspeicher und die mit Gas befüllte Kammer direkt miteinander in Verbindung, so entspricht insbesondere der Betriebsdruck des Druckspeichers dem Maximaldruck, ab welchem der Druckspeicher einem weiteren Druckanstieg in der mit Gas befüllten Kammer entgegenwirkt.

In vorteilhafter Weise hat der Druckspeicher dabei unterhalb des Maximaldrucks keinen Einfluß auf den Druck in der mit Gas befüllten Kammer. Insbesondere dehnt sich der Druckspeicher dabei bei einem Abfall des Drucks in der mit Gas befüllten Kammer unter den Maximaldruck nicht weiter aus.

Alternativ oder zusätzlich kann vorgesehen sein, daß der Druckspeicher eine von der mit Gas befüllten Kammer abweichende Kennlinie aufweist. Insbesondere kann dabei vorgesehen sein, daß der Druckspeicher unterhalb des Maximaldrucks einen geringeren Einfluß als oberhalb des Maximaldruckes auf den Druck in der mit Gas befüllten Kammer hat. So wirkt der Druckspeicher oberhalb des Maximaldrucks einem weiteren Druckanstieg der mit Gas befüllten Kammer stärker entgegen als unterhalb.

Die vorliegende Erfindung kann insbesondere bei solchen Arbeitsgeräten eingesetzt werden, bei welchen ein Druckbegrenzungsventil für die mit Gas befüllte Kammer vorgesehen ist. Vorteilhafterweise liegt dabei der Maximaldruck unterhalb des Auslösedruckes des Druckbegrenzungsventils. Durch den Druckspeicher kann so verhindert werden, daß bei einem kurzzeitigen Überschreiten des Maximaldrucks Gas durch das Druckbegrenzungsventil aus der mit Gas befüllten Kammer entweicht.

Insbesondere gleicht der erfindungsgemäße Druckspeicher dabei Druckspitzen aus, welche kurzzeitig während der Kompression der mit Gas gefüllten Kammer auftreten können. Durch den erfindungsgemäßen Druckspeicher kommt es so während dieser kurzzeitigen Druckspitzen nicht mehr zu einem Gasverlust in der mit Gas gefüllten Kammer. Weiterhin geht auch keine Energie mehr verloren.

Vorteilhafterweise liegt der Maximaldruck erfindungsgemäß oberhalb der Drücke, welche bei statischem Arbeitsgerät und Maximallast des bewegbaren Elementes in der mit Gas befüllten Kammer vorliegen. Der Druckspeicher ist dann dafür ausgelegt, lediglich dynamische Druckspitzen bei schnellen Bewegungen und/oder bei im wesentlichen kompletter Kompression der mit Gas gefüllten Kammer auszugleichen.

Im folgenden sollen nun unterschiedliche Ausführungsbeispiele eines Druckspeichers bzw. einer Wirkverbindung des Druckspeichers mit der mit Gas gefüllten Kammer näher beschrieben werden:

Die vorliegende Erfindung kann dabei insbesondere bei einem Energierückgewinnungszylinder zum Einsatz kommen, welcher bodenseitig mit Gas befüllt ist und eine hohle Kolbenstange aufweist. Der Druckspeicher kann dabei sowohl an einen solchen Energierückgewinnungszylinder angebaut oder in einen solchen Energierückgewinnungszylinder integriert sein.

In einer Ausführungsform der vorliegenden Erfindung ist dabei ein Kolben in der hohlen Kolbenstange des Energierückgewinnungszylinder verschiebbar gelagert, wobei die mit Gas befüllte Bodenseite über diesen Kolben mit dem Druckspeicher in Wirkverbindung steht.

Die Wirkverbindung zwischen dem Druckspeicher und der mit Gas gefüllten Kammer kann dabei sowohl direkt, als auch indirekt erfolgen. Eine indirekte Verbindung kann beispielsweise durch eine hydraulische Verbindung zwischen der mit Gas befüllten Kammer und einem hydraulischen Druckspeicher erfolgen.

In einer ersten Ausführung ist der Druckspeicher über eine Leitung fluidisch mit der mit Gas gefüllten Kammer verbunden. Insbesondere wird hier ein externer Druckspeicher eingesetzt, welcher außerhalb des Energiespeicherzylinders angeordnet ist. In einer vorteilhaften Ausführungsform kann der Druckspeicher dabei an den Energierückgewinnungszylinder angebaut sein. Alternativ kann der Druckspeicher auch in den Energierückgewinnungszylinder integriert sein.

Beispielsweise kann ein durch den Kolben von der Bodenseite getrennte Bereich im Inneren der hohlen Kolbenstange hydraulisch mit einem Energiespeicher in Verbindung stehen. In einer bevorzugten Ausführung der vorliegenden Erfindung ist jedoch der durch den Kolben von der Bodenseite getrennte Bereich im Inneren der hohlen Kolbenstange mit Gas gefüllt. Insbesondere ist damit der gesamte Druckspeicher im Inneren der hohlen Kolbenstange angeordnet.

In vorteilhafter Weise weist der erfindungsgemäße Druckspeicher einen Betriebsdruck auf, bei dessen Unterschreiten er sich nicht weiter ausdehnt und so keinen Einfluß mehr auf den Druck in der mit Gas befüllten Kammer ausübt. Dies kann insbesondere dadurch erfolgen, daß der Kolben eines Kolbenspeichers durch einen Anschlag in einer Position gestoppt wird, welche dem Betriebsdruck entspricht.

In weiterhin vorteilhafter Weise ist der Druckspeicher zumindest während eines Betriebsmodus des Arbeitsgerätes ständig in Wirkverbindung mit der mit Gas befüllten Kammer. Hierdurch kann sichergestellt werden, daß Druckspitzen zuverlässig abgefangen werden. Insbesondere kann so verhindert werden, daß beim Auftreten kurzzeitiger Druckspitzen die Berstsicherung aktiviert wird. Insbesondere steht dabei der Druckspeicher ohne die Zwischenschaltung von Steuergliedern in Wirkverbindung mit der Gas befüllten Kammer. Insbesondere kann vorgesehen sein, daß das Gas aus der mit Gas befüllten Kammer direkt auf eine bewegliche Fläche des Druckspeichers einwirkt.

In vorteilhafter Weise ist der erfindungsgemäße Druckspeicher als Gasspeicher ausgeführt. In weiterhin vorteilhafter Weise weist er dabei ein Befüllventil zum Befüllen mit Gas auf. Weiterhin kann auch der Druckspeicher ein Druckbegrenzungsventil aufweisen, um Beschädigungen des Druckspeichers zu vermeiden. Vorteilhafterweise ist dabei der Auslösedruck des Druckbegrenzungsventils des Druckspeichers größer als der Auslösedruck eines für die mit Gas befüllte Kammer vorgesehenen Druckbegrenzungsventils.

Ist der Druckspeicher in den Energierückgewinnungszylinder integriert, wie dies oben dargestellt wurde, so ist vorteilhafter Weise bodenseitig ein Befüllventil und ein Druckbegrenzungsventil für die mit Gas gefüllte Bodenseite vorgesehen. In weiterhin vorteilhafter Weise ist zylinderseitig ein Befüllventil und/oder ein Druckbegrenzungsventil für den durch den Kolben von der Bodenseite getrennten Bereich im Inneren des hohlen Kolbenstange vorgesehen.

Neben dem Arbeitsgerät umfaßt die vorliegende Erfindung weiterhin einen Energierückgewinnungszylinder für ein Arbeitsgerät, wie dies oben beschrieben wurde. Insbesondere weist der erfindungsgemäße Energierückgewinnungszylinder dabei eine mit Gas gefüllte Kammer auf, welche mit einem Druckspeicher so in Wirkverbindung steht, daß ein Druckanstieg in der mit Gas befüllten Kammer zumindest ab einem Maximaldruck durch den Druckspeicher verringert wird.

Insbesondere weist der erfindungsgemäße Energierückgewinnungszylinder dabei eine mit Gas befüllte Bodenseite und eine hohle Kolbenstange auf. Vorteilhafterweise ist der Energierückgewinnungszylinder dabei so ausgestaltet, wie dies oben beschrieben wurde.

Besonders bevorzugte Einsatzmöglichkeiten der vorliegenden Erfindung sollen nun noch einmal kurz beschrieben werden:

Bei dem erfindungsgemäßen Arbeitsgerät handelt es sich insbesondere um ein verfahrbares Arbeitsgerät, insbesondere ein Bagger oder eine Maschine zum Materialumschlag.

Dieses weist ein über mindestens einen Arbeits-Hydraulikzylinder bewegbares Element auf, wobei mindestens ein Energierückgewinnungszylinder zur Energierückgewinnung aus der Bewegung des bewegbaren Elements vorgesehen ist.

Dabei dient der Energierückgewinnungszylinder mit der mit Gas befüllten Kammer selbst als Energiespeicher für die Energierückgewinnung aus der Bewegung des bewegbaren Elements. Der von der Bodenseite des Energierückgewinnungszylinders gebildete Raum ist dabei vorteilhafterweise mit unter Druck stehendem Gas befüllt, welches bei einer Bewegung der Kolbenstange gegen den Boden komprimiert wird. Die dabei gespeicherte Energie steht dann bei einer Aufwärtsbewegung der Kolbenstange zur Unterstützung des Arbeits-Hydraulikzylinders wieder zur Verfügung. In weiterhin vorteilhafter Weise ist die Kolbenstange des Energierückgewinnungszylinders hohl und zur Bodenseite hin offen, so dass das Innere der Kolbenstange einen Teil der mit Gas befüllten Kammer bildet.

Das bewegbare Element des erfindungsgemäßen Arbeitsgerätes ist vorteilhafterweise am Arbeitsgerät um eine vertikale Drehachse schwenkbar angelenkt und über den oder die Arbeits-Hydraulikzylinder in einer vertikalen Schwenkebene verschwenkbar. Insbesondere handelt es sich bei dem bewegbaren Element dabei um den Stiel eines Baggers oder den Ausleger einer Maschine zum Materialumschlag. Weiterhin vorteilhafterweise weist das verfahrbare Arbeitsgerät dabei einen Unterwagen mit Fahrwerk und einen darauf um eine vertikale Drehachse drehbar angeordneten Oberwagen auf, an welchem das bewegliche Element angelenkt ist.

Am bewegbaren Element kann dabei ein Arbeitswerkzeug, zum Beispiel eine Schaufel oder ein Greifer, angeordnet sein. Beim Absenken des bewegbaren Elementes wird die potentielle Energie des bewegbaren Elementes und des Arbeitswerkzeugs über den Energierückgewinnungszylinder gespeichert, um bei der Aufwärtsbewegung des bewegbaren Elements das Ausrüstungsgewicht zumindest teilweise wieder zu kompensieren. Hierdurch muß über die Arbeits-Hydraulikzylinder weniger Energie aufgewendet werden, um das bewegbare Element nach oben zu bewegen. Hierdurch verbessert sich die Energiebilanz des Arbeitsgerätes, da weniger installierte Motorleistung benötigt wird und der Kraftstoffverbrauch gesenkt wird.

Der erfindungsgemäße Energierückgewinnungszylinder ist dabei vorteilhafterweise wie der oder die Arbeits-Hydraulikzylindern zwischen einem Oberwagen des Arbeitsgerätes und dem bewegbaren Element angeordnet. Der Energierückgewinnungszylinder bewegt sich damit bei einer Bewegung des bewegbaren Elementes gleichzeitig zum Arbeits-Hydraulikzylinder.

Die vorliegende Erfindung wird nun anhand von Ausführungsbeispielen sowie Zeichnungen näher beschrieben.

Dabei zeigen
- Fig. 1: ein Ausführungsbeispiel eines erfindungsgemäßen Arbeitsgerätes mit zwei Arbeits-Hydraulikzylindern und einem Energierückgewinnungszylinder,
- Fig. 2 a: eine Prinzipdarstellung einer ersten Variante des erfindungsgemäßen Energierückgewinnungszylinders,

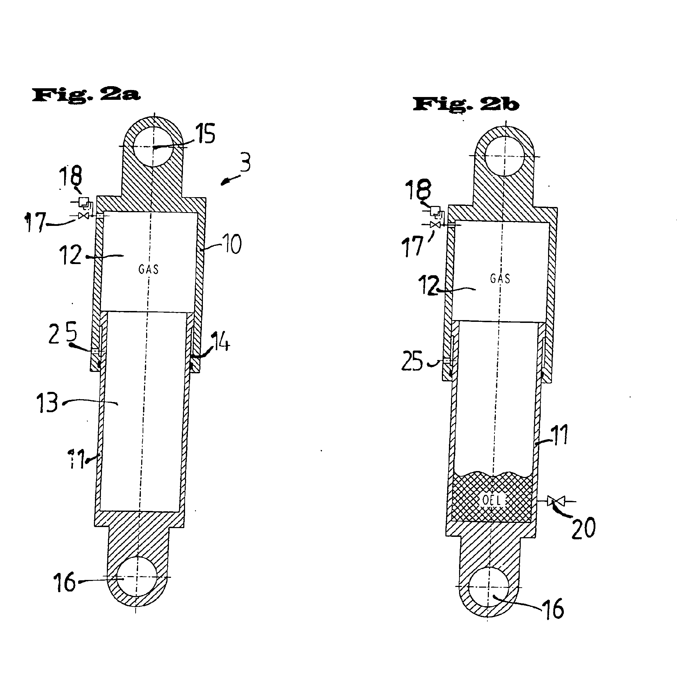

- Fig. 2: b eine Prinzipdarstellung eines zweiten Variante des erfindungsgemäßen Energierückgewinnungszylinders,

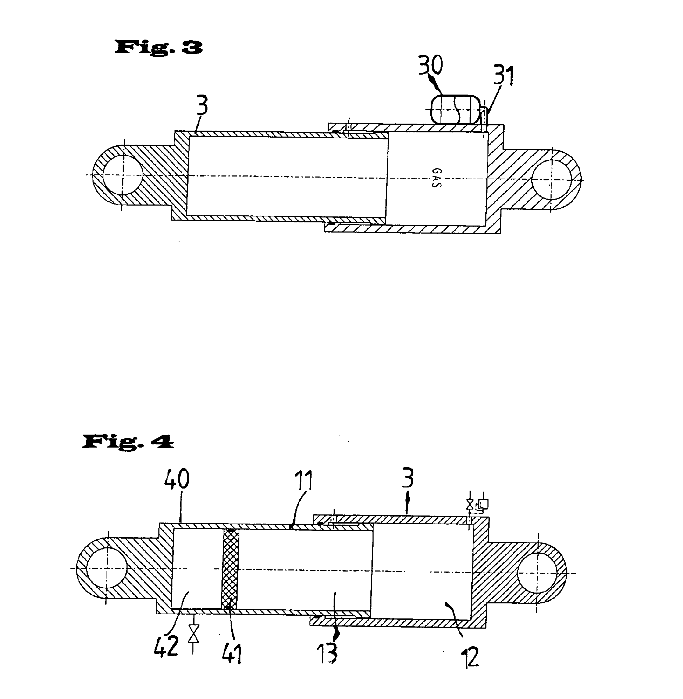

- Fig. 3: ein erstes Ausführungsbeispiel eines erfindungsgemäßen Energierückgewinnungszylinders mit einem externen Druckspeicher und
- Fig. 4: ein zweites Ausführungsbeispiel eines erfindungsgemäßen Energierückgewinnungszylinders mit einem internen Druckspeicher.

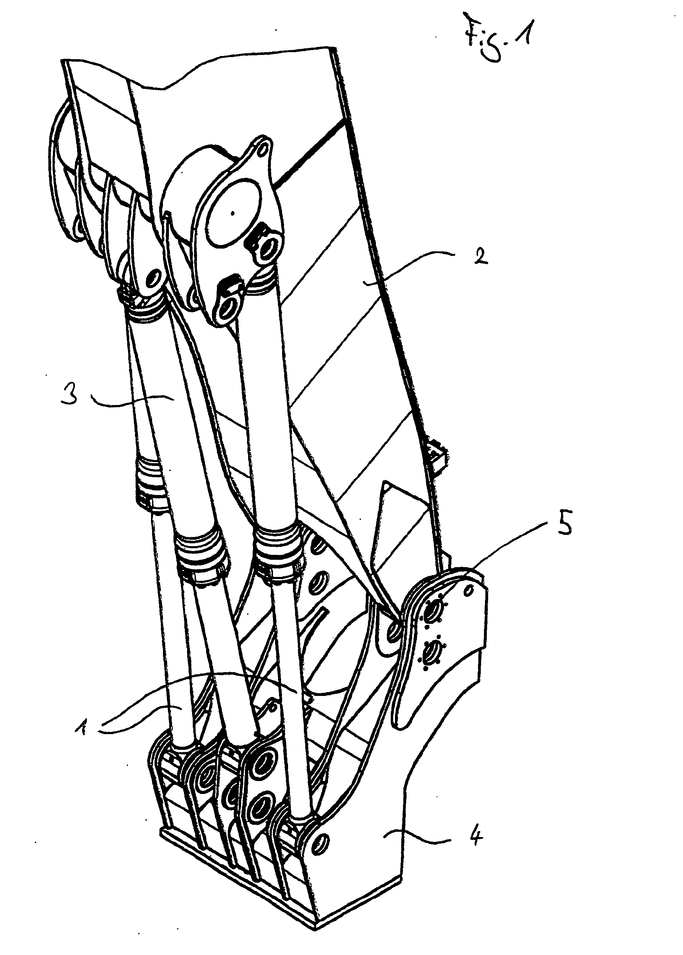

Anhand der Figuren 1 und 2 soll nun zunächst allgemein ein Ausführungsbeispiel eines Arbeitsgerätes mit einem Energierückgewinnungszylinder gezeigt werden, bei welchem die vorliegende Erfindung zum Einsatz kommen kann.

Das Arbeitgerät umfasst dabei einem bewegbares Element 2, welches über eine horizontal verlaufende Schwenkachse 5 an einer Schweißkonstruktion 4 des Arbeitsgerätes angelenkt ist. Bei dem Arbeitsgerät handelt es sich dabei um einen Hydraulikbagger, bei dem bewegbaren Element 2 um den Baggerstiel, welcher am Oberwagen des Baggers angelenkt ist. Der Oberwagen selbst ist dabei um eine vertikale Drehachse auf einem Unterwagen mit Fahrgestell drehbar angelenkt.

Zum Bewegen des bewegbaren Elementes 2 sind dabei zwei Arbeits-Hydraulikzylinder 1 vorgesehen, welche über entsprechende Anlenkpunkte am bewegbaren Element 2 sowie an der Schweißkonstruktion 4 des Oberwagens angelenkt sind. Weiterhin ist ein Ausführungsbeispiel eines erfindungsgemäßen Energierückgewinnungszylinders 3 vorgesehen, welcher wie die Arbeits-Hydraulikzylinder 1 zwischen dem bewegbaren Element 2 und dem Oberwagen des Arbeitsgerätes 4 angeordnet ist und der Energierückgewinnung aus der Bewegung des bewegbaren Elements dient. Der Energierückgewinnungszylinder 3 ist dabei zwischen den beiden Arbeits-Hydraulikzylindern 1 angeordnet.

An dem bewegbaren Element 2, in diesem Fall dem Baggerausleger, ist dabei üblicherweise eine Arbeitsausrüstung, zum Beispiel eine Baggerschaufel angeordnet. Beim Absenken des bewegbaren Elementes 2 soll nun die potentielle Energie des bewegbaren Elementes sowie der Arbeitsausrüstung rückgewonnen und gespeichert werden, um bei der Aufwärtsbewegung des bewegbaren Elements die statischen Kräfte, welche durch das Gewicht des bewegbaren Elements und der Arbeitsausrüstung sonst auf den Arbeits-Hydraulikzylindern lasten würden, zumindest teilweise zu kompensieren und so weniger Energie mittels der Arbeits-Hydraulikzylinder 1 zuführen zu müssen. Hierfür weist der erfindungsgemäße Hydraulikzylinder vorteilhafterweise eine mit Gas gefüllte Kammer auf. Bei einem Absenken des bewegbaren Elementes wird das Gas in der mit Gas gefüllten Kammer des Energierückgewinnungszylinders komprimiert, während es sich beim Anheben des bewegbaren Elementes ausdehnt und dabei die Arbeits-Hydraulikzylinder 1 unterstützt. Hierfür ist der erfindungsgemäße Energierückgewinnungszylinder vorteilhafterweise bodenseitig mit Gas befüllt und weist weiterhin vorteilhafterweise eine hohle, zur Bodenseite hin offene Kolbenstange auf.

In Fig. 2 a und 2 b sind nun Prinzipzeichnungen zweier Varianten eines Energierückgewinnungszylinders 3 gezeigt. Beide Ausführungsbeispiele weisen dabei einen Zylinder 10 auf, in welchem eine Kolbenstange 11 axial verschieblich gelagert ist. Die Kolbenstange 11 hat dabei die Form eines Hohlzylinders, so daß sich im Inneren der Kolbenstange 11 ein Hohlraum 13 ergibt, welcher zur Bodenseite 12 des Zylinders hin offen ist. Die Bodenseite 12 des Energierückgewinnungszylinders 3 und der Hohlraum 13 im Inneren der Kolbenstange 11 bilden dabei eine zusammenhängende Kammer, welche mit unter Druck stehendem Gas befüllt ist. Bei einer Bewegung der Kolbenstange 11 im Zylinder 10 verändert sich dabei die Größe der Bodenseite 12, so daß das mit Gas befüllte Volumen bei voll eingeschobener Kolbenstange 11 im Wesentlichen dem Hohlraum 13 im Inneren der hohlen Kolbenstange entspricht, bei voll ausgeschobener Kolbenstange dagegen dem Volumen dieses Hohlraums 13 plus dem Volumen des Zylinders 10.

Der Energierückgewinnungszylinder weist dabei ein bodenseitiges Lagerstelle 15 und ein kolbenstangenseitiges Lagerstelle 16 auf, mit welchen er am Arbeitsgerät und beweglichen Element angelenkt ist. Der Energierückgewinnungszylinder ist dabei zwischen bewegbarem Element und Arbeitsgerät so angelenkt, daß die Kolbenstange 11 durch das Gewicht des bewegbaren Elementes und der Arbeitsausrüstung nach unten gegen den Boden des Energierückgewinnungszylinders bewegt wird, so daß das Gasvolumen komprimiert wird. Durch die erfindungsgemäße Ausführung des Energierückgewinnungszylinders mit einer hohlen Kolbenstange 11 ist dabei auch bei eingefahrenem Zylinder ausreichend Gasvolumen vorhanden, um einen flachen Druckanstieg beim Senken der Arbeitsausrüstung zu ermöglichen. Umgekehrt ruht bei einer Aufwärtsbewegung des bewegbaren Elementes ein Teil des Gewichts auf dem Gasvolumen im Energierückgewinnungszylinder, so daß die Arbeits-Hydraulikzylinder nicht mehr die komplette statische Last aufbringen müssen.

Der Energierückgewinnungszylinder weist ein Befüllventil 17 zum Befüllen der Kammer mit Gas und ein Druckbegrenzungsventil 18 zur Begrenzung des Gasdrucks auf. Im ersten Ausführungsbeispiel in Fig. 2 a sind dabei das Befüllventil 17 und das Druckbegrenzungsventil 18 bodenseitig angeordnet. In dem in Figur 2 b gezeigten zweiten Ausführungsbeispiel sind das Befüllventil 17 und das Druckbegrenzungsventil 18 dagegen kolbenstangenseitig angeordnet.

Bei den in Fig. 2a und 2b gezeigten Energierückgewinnungszylindern handelt es sich um einen zweiseitige Hydraulikzylinder, so daß ein Ringraum 14 vorgesehen ist, welcher über einen Anschluß 12 an ein Hydrauliksystem des Arbeitsgerätes anschließbar ist. Auch die Bodenseite kann einen Anschluß aufweisen, über welche sie an ein Hydrauliksystem des Arbeitsgerätes anschließbar ist.

Wie in Fig. 2 b gezeigt, kann das Gasvolumen im Energierückgewinnungszylinder dabei durch Zuführen oder Abführen von Öl zum Energierückgewinnungszylinder verändert werden. Hierfür ist im zweiten Ausführungsbeispiel in Fig. 2 b ein Anschluß 20 zu Versorgung mit Öl vorgesehen, über welchen der Bodenraum des Energierückgewinnungszylinders an ein Hydrauliksystem des Arbeitsgerätes anschließbar ist.

Die Erfinder der vorliegenden Erfindung haben festgestellt, daß es insbesondere bei einem schnellen Einfahren und/oder bei vollständiger Kompression der mit Gas befüllten Kammer des Energierückgewinnungszylinders zu kurzzeitigen Druckspitzen im Zylinder kommt. Diese Druckspitzen treten nur für sehr kurze Zeit auf, können jedoch ohne Gegenmaßnahmen das Druckbegrenzungsventil 18, welches als Berstsicherung verbaut wurde, aktivieren. Dies würde im Betrieb des Energierückgewinnungszylinders zu einem stetigen Gasverlust bei Druckspitzen führen. Zudem geht hierdurch Energie durch das Entweichen des komprimierten Gases verloren.

Erfindungsgemäß steht die mit Gas befüllte Kammer daher mit einem Druckspeicher in Wirkverbindung, welcher einen Druckanstieg in der mit Gas befüllten Kammer zumindest ab einem Maximaldruck entgegenwirkt. Der erfindungsgemäße zusätzliche Druckspeicher kann so die Druckspitzen abfangen, und ein Aktivieren des Druckbegrenzungsventils verhindern.

Die während der Kompression für sehr kurze Zeit auftretenden Druckspitzen können so über den Druckspeicher abgefangen werden, so daß zum einen kein Gas aus der mit Gas gefüllten Kammer verloren geht, und zum anderen die Energie aus den Druckspitzen über den Druckspeicher gespeichert und zurückgegeben werden kann.

Der erfindungsgemäße Druckspeicher weist dabei einen Betriebsdruck auf, welcher größer oder gleich dem Betriebsdruck im Gaszylinder ist. Insbesondere ist dieser Betriebsdruck dabei niedriger als der Druck, bei welchem das Druckbegrenzungsventil 18 der mit Gas gefüllten Kammer auslöst. Der Betriebsdruck des Druckspeichers sollte dabei jedoch so hoch sein, daß dieser im statischen Zustand oder bei nur geringen Geschwindigkeiten das Verhalten der mit Gas gefüllten Kammer nicht wesentlich beeinflußt.

Ein solcher Druckspeicher kann insbesondere dadurch realisiert werden, daß die bewegliche Fläche des Druckspeichers, welche mit der mit Gas befüllten Kammer in Wirkverbindung steht, nur bis zu einem Punkt bewegbar ist, welcher dem gewünschten Maximaldruck in der mit Gas gefüllten Kammer entspricht. Ist der zusätzliche Druckspeicher als Kolbenspeicher ausgeführt, kann zum Beispiel ein Anschlag für den Kolben vorgesehen sein, welcher eine weitere Ausdehnung des Kolbenspeichers bei Unterschreiten des Maximaldrucks in der mit Gas gefüllten Kammer verhindert. Dabei sind auch andere Druckspeicher denkbar, solange deren Kennlinie unterhalb des Maximaldrucks entsprechend abfällt.

In Figur 3 ist ein erstes Ausführungsbeispiel eines erfindungsgemäßen Energierückgewinnungszylinders gezeigt. Der Energierückgewinnungszylinder 3 kann dabei so aufgebaut sein, wie dies oben zu den Figuren 1 und 2 dargestellt wurde. Die mit Gas gefüllte Kammer im Inneren des Energierückgewinnungszylinders steht dabei über eine Leitung 31 mit einem externen Druckspeicher 30 in Wirkverbindung. Insbesondere steht dabei das Gas in der mit Gas gefüllten Kammer über diese Leitung 31 direkt fluidisch mit einem veränderlichen Volumen im Inneren des Druckspeichers 30 in Verbindung. In vorteilhafter Weise ist dabei der Druckspeicher außen am Energierückgewinnungszylinder 30 angebaut.

In Figur 4 ist eine zweite Ausführungsform der vorliegenden Erfindung gezeigt, bei welcher ein interner Druckspeicher 40 vorgesehen ist. Der Energierückgewinnungszylinder 3 ist dabei wiederum so aufgebaut, wie dies bereits zu Figuren 1 und 2a näher dargestellt wurde. Insbesondere weist er dabei eine mit Gas befüllte Bodenseite 12 sowie eine Kolbenstange 11 auf, welche hohl ausgeführt ist. Im Inneren 13 der Kolbenstange 11 ist dabei ein Kolben 41 beweglich angeordnet. Der über den Kolben 41 von der Bodenseite 12 getrennte Bereich 42 im Inneren des Kolbens 11 ist dabei ebenfalls mit Gas gefüllt. Hierdurch wird ein interner zusätzlicher Druckspeicher zur Verfügung gestellt, um Druckspitzen abzufangen. Vorteilhafterweise ist dabei ein Anschlag vorgesehen, durch welchen die Bewegung des Kolbens 41 in Richtung auf die Bodenseite 12 begrenzt wird. Hierdurch hat der zusätzliche Druckspeicher unterhalb eines Maximaldrucks, welcher dem Druck im Inneren der Kammer 42 bei maximal ausgefahrenem Kolben 41 entspricht, keinen Einfluß auf die Druckverhältnisse in der mit Gas befüllten Kammer 12. Hierdurch kann im Normalbetrieb ein ausreichend hoher Druck in der mit Gas befüllten Bodenseite 12 erreicht werden.

Bei Übersteigen des Maximalwerts des Drucks wird der Kolben 41 dagegen verschoben und es entsteht hierdurch ein größeres Raumvolumen im Energierückgewinnungsgaszylinder. Durch diese Volumenvergrößerung wird die Druckanstiegskurve abgeflacht und ein Ansprechen des Druckbegrenzungsventils verhindert.

Vorteilhafterweise ist dabei das Druckbegrenzungsventil 18 wie in Figur 2a gezeigt bodenseitig angeordnet. Weiterhin ist in vorteilhafter Weise wie in Figur 2a gezeigt ein Befüllventil zum Befüllen der Bodenseite vorgesehen.

In weiterhin vorteilhafter Weise ist weiterhin kolbenseitig eine zweites Druckbegrenzungsventil und/oder ein zweites Befüllventil für die Kammer 42 des Druckspeichers 40 vorgesehen. Diese können wie in Fig. 2b gezeigt angeordnet seien. So kann der Betriebsdruck des Druckspeichers 40 durch Einstellen der Gasmenge in der Kammer 42 eingestellt werden.

Durch die vorliegende Erfindung kann so eine frühzeitige Auslösung der Berstsicherung durch kurzfristige Druckspitzen auf einfache Art und Weise vermieden werden. Hierdurch wird die langfristige Betriebstauglichkeit des Energierückgewinnungszylinders und die Energiebilanz verbessert.

In den Ausführungsbeispielen wurde die vorliegende Erfindung anhand eines Arbeitsgerätes gezeigt, bei welchem das bewegbare Element an einer horizontalen Schwenkachse schwenkbar angelenkt ist und sowohl der Arbeitszylinder als auch der Energierückgewinnungszylinder an dem bewegbaren Element angeordnet sind.

Der erfindungsgemäße Energierückgewinnungszylinder kann jedoch auch bei beliebigen anderen Arbeitsgeräten, bei welchen aus der Bewegung eines zu bewegenden Elementes Energie rückgewonnen werden soll, vorteilhaft eingesetzt werden.

## Patentansprüche

1. Arbeitsgerät, insbesondere Bagger oder Maschine zum Materialumschlag, mit einem über mindestens einen Arbeits-Hydraulikzylinder bewegbaren Element, wobei mindestens ein Energierückgewinnungszylinder zur Energierückgewinnung aus der Bewegung des bewegbaren Elements vorgesehen ist, welcher eine mit Gas befüllte Kammer aufweist,
**dadurch gekennzeichnet,**
**dass** die mit Gas befüllte Kammer mit einem Druckspeicher in Wirkverbindung steht, welcher einem Druckanstieg in der mit Gas befüllten Kammer zumindest ab einem Maximaldruck entgegenwirkt.

2. Arbeitsgerät nach Anspruch 1, wobei der Druckspeicher einen vorbestimmten Betriebsdruck aufweist, welcher den Maximaldruck definiert, vorteilhafterweise der Druckspeicher unterhalb des Maximaldruckes keinen Einfluß auf den Druck in der mit Gas befüllten Kammer hat und/oder wobei der Druckspeicher eine von der mit Gas befüllten Kammer abweichende Kennlinie aufweist, wobei vorteilhafterweise der Druckspeicher unterhalb des Maximaldruckes einen geringeren Einfluß als oberhalb des Maximaldrucks auf den Druck in der mit Gas befüllten Kammer hat.

3. Arbeitsgerät nach Anspruch 1 oder 2, wobei ein Druckbegrenzungsventil für die mit Gas befüllte Kammer vorgesehen ist, wobei der Maximaldruck unterhalb des Auslösedruckes des Druckbegrenzungsventils liegt.

4. Arbeitsgerät nach einem der vorangegangenen Ansprüche, wobei der Druckspeicher Druckspitzen ausgleicht, welche kurzzeitig während der Kompression der mit Gas gefüllten Kammer auftreten können und/oder wobei der Maximaldruck oberhalb der bei statischem Arbeitsgerät und Maximallast vorliegenden Drücke in der mit Gas befüllten Kammer liegt.

5. Arbeitsgerät nach einem der vorangegangenen Ansprüche, wobei der Druckspeicher über eine Leitung fluidisch mit der mit Gas gefüllten Kammer verbunden ist, wobei der Druckspeicher vorteilhafterweise an dem Energierückgewinnungszylinder angebaut ist.

6. Arbeitsgerät nach einem der vorangegangenen Ansprüche, wobei der Druckspeicher in den Energierückgewinnungszylinder integriert ist.

7. Arbeitsgerät nach einem der vorangegangenen Ansprüche, wobei der Energierückgewinnungszylinder bodenseitig mit Gas befüllt ist und eine hohle Kolbenstange aufweist.

8. Arbeitsgerät nach Anspruch 7, wobei ein Kolben in der hohlen Kolbenstange des Energierückgewinnungszylinders verschiebbar gelagert ist, durch welchen die mit Gas befüllte Bodenseite mit dem Druckspeicher in Wirkverbindung steht.

9. Arbeitsgerät nach Anspruch 8, wobei der durch den Kolben von der Bodenseite getrennte Bereich im Inneren der hohlen Kolbenstange mit Gas gefüllt ist.

10. Energierückgewinnungszylinder für ein Arbeitsgerät nach einem der vorangegangenen Ansprüche.
